(19) Europäisches Patentamt / European Patent Office / Office européen des brevets

(11) **EP 1 574 592 B1**

(12) **EUROPEAN PATENT SPECIFICATION**

(45) Date of publication and mention
of the grant of the patent:
**01.04.2020 Bulletin 2020/14**

(21) Application number: **03778839.5**

(22) Date of filing: **11.12.2003**

(51) Int Cl.:
*C22C 38/02* *(2006.01)*  *C22C 38/00* *(2006.01)*
*C22C 38/34* *(2006.01)*  *C22C 38/50* *(2006.01)*
*F16C 33/32* *(2006.01)*  *F16C 33/34* *(2006.01)*
*F16C 33/62* *(2006.01)*  *C21D 9/40* *(2006.01)*
*C22C 38/44* *(2006.01)*  *C22C 38/46* *(2006.01)*
*C22C 38/48* *(2006.01)*  *C22C 38/04* *(2006.01)*
*C22C 38/06* *(2006.01)*  *C22C 38/18* *(2006.01)*
*C22C 38/20* *(2006.01)*  *C22C 38/22* *(2006.01)*
*C22C 38/24* *(2006.01)*  *C22C 38/26* *(2006.01)*
*C22C 38/40* *(2006.01)*

(86) International application number:
**PCT/JP2003/015902**

(87) International publication number:
**WO 2004/057049 (08.07.2004 Gazette 2004/28)**

(54) **BEARING STEEL EXCELLENT IN WORKABILITY AND CORROSION RESISTANCE, METHOD FOR PRODUCTION THEREOF, AND BEARING MEMBER AND METHOD FOR MANUFACTURE THEREOF**

LAGERSTAHL MIT HERVORRAGENDER BEARBEITBARKEIT UND KORROSIONSBESTÄNDIGKEIT, HERSTELLUNGSVERFAHREN DAFÜR UND LAGERELEMENT UND FERTIGUNGSVERFAHREN DAFÜR

ACIER POUR ROULEMENTS PRESENTANT UNE EXCELLENTE APTITUDE A L'USINAGE ET UNE EXCELLENTE RESISTANCE A LA CORROSION, SON PROCEDE DE PRODUCTION, ELEMENT DE ROULEMENT ET SON PROCEDE DE PRODUCTION

(84) Designated Contracting States:
**DE FR**

(30) Priority: **12.12.2002 JP 2002360955**

(43) Date of publication of application:
**14.09.2005 Bulletin 2005/37**

(73) Proprietors:
• **Nippon Steel Corporation**
**Tokyo (JP)**
• **THK CO., LTD.**
**Shinagawa-ku,**
**Tokyo 141-8503 (JP)**

(72) Inventors:
• **TAKADA, Hiromasa,**
**NIPPON STEEL CORPORATION**
**Muroran-shi, Hokkaido 050-0087 (JP)**
• **SHINBE, Junzou,**
**THK Co., Ltd**
**Shinagawa-ku, Tokyo 141-8503 (JP)**

• **MICHIOKA, Hidekazu,**
**THK Co., Ltd**
**Shinagawa-ku, Tokyo 141-8503 (JP)**
• **SHIRAI, Takeki,**
**THK Co., Ltd**
**Shinagawa-ku, Tokyo 141-8503 (JP)**

(74) Representative: **Vossius & Partner**
**Patentanwälte Rechtsanwälte mbB**
**Siebertstrasse 3**
**81675 München (DE)**

(56) References cited:
**EP-A- 1 123 986      EP-A- 1 355 071**
**EP-A- 1 357 308      EP-A1- 1 123 986**
**JP-A- 2 294 453      JP-A- 2 294 453**
**JP-A- H04 236 715      JP-A- H04 337 024**
**JP-A- 2000 087 191      JP-A- 2000 087 191**
**JP-A- 2000 297 345      JP-B- 61 053 404**
**JP-B2- 61 053 404**

EP 1 574 592 B1

**Description**

TECHNICAL FIELD

The present invention relates to corrosion resistance bearing steel for use as a material of a bearing part used in a relatively mild corrosive environment and an environment in which use of anticorrosive oil is restricted, a method of production for producing steel bars or wire rod of said bearing steel, and bearing parts or precision equipment parts produced from said steel bars or wire rod.

The present invention is applied to rails and carriages for linear motion guiding systems, ball screws, XY tables, rotary motion roller bearings, radial bearings, steel balls, and other bearing parts in general and precision equipment members.

BACKGROUND ART

Among bearing parts, there are some which are used in states where the rolling parts are exposed to relatively mild corrosive environments, but due to the demands of the objectives of use, do not allow use of anticorrosive agents or lubricants. At the present time, such bearings are made using high alloy steel such as martensitic stainless steel.

The martensitic stainless steel standardized under the Japan Industrial Standard (JIS) is steel containing Cr in at least an amount of 11.5 mass%. In particular, the SUS440 being used for bearings contains at least 0.6 mass% of C and at least 16 mass% of Cr.

Such high Cr steel is not only expensive, but also extremely easily quenched, so in the steps of production from the casting to the steel bars or wire rod, it is essential to slowly cool it after heating and working so as to prevent season cracking, secure shearing ability, etc.

Still further, since the hot ductility of the steel is low and a high quenching temperature is required, the producibility of the parts is also poor, so the cost of the final parts becomes extremely high.

To solve such a problem, steel of lower alloying than SUS440 and provided with both the necessary corrosion resistance and rolling fatigue strength have been studied.

For example, Japanese Unexamined Patent Publication (Kokai) No. 9-195008 discloses as corrosion resistant bearing steel a bearing steel containing C in an amount of 0.75 to 0.85 mass% and Cr in an amount of 8.0 to 10.5 mass% and having an average carbide distance of at least 0.45 $\mu$m and not more than 1.00 $\mu$m.

Further, Japanese Unexamined Patent Publication (Kokai) No. 11-217653 discloses as high corrosion resistant, high strength martensitic stainless steel excellent in machinability a steel made to contain C in an amount of 0.25 to 0.50 mass% and Cr in an amount of 10 to 16 mass% so as to increase the C/Cr ratio and raise the corrosion resistance and still further made to contain Si in an amount of 1.0 mass% or more to improve the machinability.

In austenitic stainless steel, it is known that N (nitrogen) raises the corrosion resistance, but in martensitic stainless steel, there are also examples of utilization of the N dissolving at the time of quenching heating as a strengthening element.

For example, Japanese Unexamined Patent Publication (Kokai) No. 7-233442 discloses as a wear resistant and corrosion resistant bearing steel excellent in rolling fatigue characteristics a steel containing C in an amount of 0.5 to 1.3 mass%, Cr in an amount of 11 to 20 mass%, and N in an amount of 0.06 to 0.20 mass%. Japanese Unexamined Patent Publication No. H-04-337024 discloses a bearing steel having a good rolling fatigue strength even at 300 deg.C which is produced by preliminary carburizing, air cooling, spheroidizing and carburizing.

Martensitic stainless steel and its alternative steels are steels which are excellent in corrosion resistance and provided with rolling fatigue characteristics sufficient for bearing steel. However, these steels suffer from the following problems.

That is, (a) since they are high Cr compositions, the alloy cost is high and (b) since they are easily quenched, it is necessary to slowly cool the steel in the process of production of ingots, slabs, steel bars, and wire rod to soften it and prevent a drop in shearing ability or delayed fracture, so there is the problem that the producibility is poor.

DISCLOSURE OF INVENTION

The present invention provides corrosion resistance bearing steel still provided with a conventional steel level of corrosion resistance and rolling fatigue life even if further reduced in expensive Cr content and excellent in producibility of ingots, slabs, steel bars, and wire rod and a method of production of said bearing steel material and a bearing part produced using said material and its method of production and thereby attempts to solve the above problems.

A first means for reducing the alloy cost is to reduce the Cr content. However, Cr is an alloy ingredient required for raising the corrosion resistance, so some sort of method is required for compensating for the corrosion resistance.

The inventors took note of the fact that the corrosion resistance required in a bearing part is mainly pitting resistance. It is well known that a Cr passive film reduces the total amount of corrosion, and Cr also has a large effect of suppression of occurrence of pitting.

However, pitting is preferentially formed starting from some sort of surface defects, so it is believed that the occurrence of pitting is influenced by alloy ingredients forming second phases functioning as defects, in particular S, Al, Ti, and/or N.

Therefore, the inventors studied various compositions of steel with the aim of improving the pitting resistance while keeping the amount of Cr to a minimum.

First, the inventors melted steels of basic compositions, by mass%, of 0.5%C-0.2%Si-0.5%Mn-0.02%P-balance Fe and unavoidable impurities and changed in contents of Cr, S, Ni, Al, Ti, Mo, and N and, as a low Cr content conventional steel, steel of 0.5%C-0.2%Si-0.3%Mn-0.02%P-0.018%S-10.5%Cr-0.03%Al-0.5%Mo-0.025%N-balance substantially Fe (hereinafter referred to as the "Steel A") by vacuum melting, cast them into 16kg-ingots, and hot forged them to steel bars of diameters of 45 mm.

After this, to simulate the process of production of actual bearing parts, the steel bars were normalized by heating at 1000°C for 600 seconds and slow cooling, annealed by heating at 950°C for 10800 seconds and slow cooling, still further quenched and tempered by QT-treatment (quenching and tempering-treatment), that is, by heating at 1000°C for 300 seconds, oil cooling, heating at 150°C for 3600 seconds, and slow cooling, then ground to finish them into steel bars of a surface roughness Rz of 1.0 $\mu$m and a diameter of 40 mm.

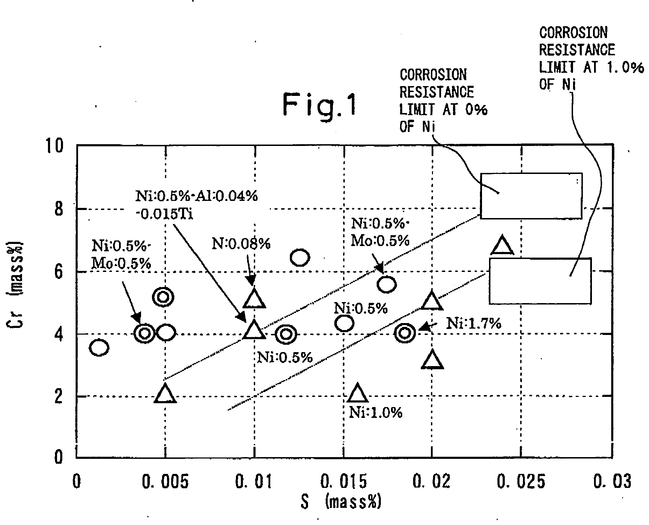

These steels were subjected to a damp heat cycle test with no low temperature cycle (24 hr/cycle) in accordance with JIS C0028 and compared for number of cycles until occurrence of pitting. The results are shown in FIG. 1.

FIG. 1 shows the results of the comparison by Cr content and S content. "A double circle" means better than the Steel A (conventional steel) (number of cycles until pitting greater than conventional steel), "a circle" means equivalent, and "a triangle" means inferior (number of cycles until pitting less than conventional steel).

In FIG. 1, the plots with no notations relate to steels containing 0% of Ni, Al, Ti, and Mo an 0.01% of N. From FIG. 1, it is learned that Cr has to be contained in an amount of at least 3% an S has to be reduced in relation with Cr and/or Ni.

Further, it is learned that if adding Ni and/or Mo having an effect of improvement of the corrosion resistance, the corrosion resistance rises, and if reducing the Al, Ti, and/or N, similarly the corrosion resistance rises. In FIG. 1, the line of Ni: 0% and the line of Ni: 1.0% show the effects of Ni.

For example steel containing Ni in an amount of 0% and N in an amount of 0.01% is provided with a pitting resistance equal to or better than that of the Steel A (conventional steel) in the region above the Ni: 0% line (high Cr-low S region). Further, steel containing Ni in an amount of 1.0% similarly is provided with a pitting resistance equal to that of the Steel A (conventional steel in the region above the Ni: 1.0% line).

The inventors evaluated the pitting resistance by a damp heat cycle test prescribed in JIS C0028 and as a result discovered that a pitting resistance equal to that of the 10 mass% Cr-containing Steel A (conventional steel) can be realized by a combination of addition of 3 to 8 mass% of Cr and reduction of the amount of inclusions and/or precipitates in the steel.

Note that the damp heat cycle test prescribed in JIS C0028 is a test reproducing a relatively mild corrosive environment of no contact with salt or acid.

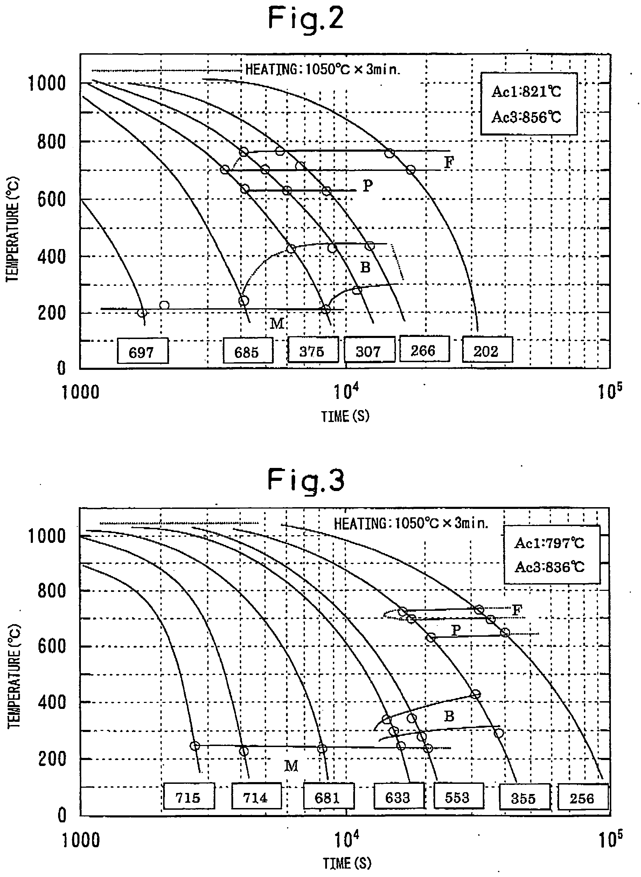

Still further, the inventors, as shown in FIG. 2 and FIG. 3, prepared a continuous cooling transformation (CCT) diagram of the Steel A (conventional steel) and a continuous cooling transformation (CCT) diagram of a steel believed to be provided with a corrosion resistance the same as the Steel A, that is, "0.50%C-0.2%Si-0.6%Mn-0.02%P-5.0%Cr-0.5%Mo-0.5%Ni-0.015%N-bal. substantially Fe steel"(hereinafter referred to as the "Steel B").

From FIG. 2 and FIG. 3, Steel B, despite having an amount of Cr 5% or more less than the Steel A, has ferrite and bainite transformation noses at the longer time side. It is learned that it is mostly easily quenched than the Steel A (conventional steel). That is, steel of a composition like the Steel B, like the Steel A or stainless bearing steel, requires post-heat treatment for softening at the time of rolling it into steel bars or wire rods.

Therefore, the inventors still further studied compositions maintaining the corrosion resistance yet hard to quench. As a result, they discovered that the effect of Cr on the bainite transformation nose in the CCT diagram is not that remarkable in the range of a Cr content of 4 to 7% and that the addition of slight amounts of Mn and/or Mo in this range of composition causes the bainite transformation nose to greatly move to the longer time side.

That is, they discovered that to maintain the corrosion resistance of steel while making it resistant to quenching, increasing the Cr and reducing the Mn and/or Mo are reasonable.

Still further, the inventors discovered that as the method for promoting the ferrite transformation, it is effective to make joint use of the method of utilization of the ferrite stabilizing element Si and the method of increasing the fineness of the $\gamma$-crystal grains at the time of rolling the material to promote the ferrite and bainite transformations by utilizing carbides of V and/or Nb.

Further, the inventors studied the method of production of the steel material for reliably softening the rolled material of the steel of the present invention. As a result, the inventors confirmed that if rolling the steel of the present invention by the controlled rolling and controlled cooling used for softening of case hardened steel and other alloy steel, the ferrite and pearlite or the bainite transformation is promoted and the martensite fraction is reduced.

Controlled rolling enabled, even without slow cooling, the hardness after cooling to be reduced, shearability to be secured, and delayed fractures to be prevented. Further, it was possible to suppress the martensite transformation to prevent occurrence of bending during cooling.

Further, the inventors confirmed that, as the conditions for obtaining the above softening effect, it is desirable to make the rolling end temperature (finishing temperature) less than 950°C and cooling in the ferrite, pearlite, and bainite transformation temperature region of 800 to 400°C by 0.3°C/sec or less.

Still further, the inventors also studied the method of production for softening steel making use of the continuous heat treatment furnace generally installed in wire rod rolling mills after the rolling lines for tempering and slow cooling.

If becoming as quenching resistance as the steel of the present invention, it is possible to effectively use the heat treatment furnaces after the rolling lines for softening.

That is, if loading the steel of the present invention after the hot-rolling in a heat treatment furnace in the austenite state as is, reheating to the pearlite transformation temperature region, and holding at the ferrite and pearlite transformation temperature region or slow cooling, it is possible to obtain a soft pearlite or ferrite and pearlite structure in a short time.

On the other hand, in the case of conventional steel, the treatment time for the softening becomes extremely long and therefore the productivity of a continuous furnace is remarkably reduced.

Based on the above studies, the inventors completed the present invention.

The invention is achieved by the features of claim 1. Advantageous embodiments of the invention are specified in the dependent claims.

BRIEF DESCRIPTION OF THE DRAWINGS

FIG. 1 is a view showing the results of evaluation of corrosion resistance by a damp heat cycle test compared against the corrosion resistance of conventional steel (10%Cr steel (Steel A)).

FIG. 2 is a CCT diagram of the Steel A.

FIG. 3 is a CCT diagram of 5%Cr steel provided with a corrosion resistance equivalent to the Steel A.

THE MOST PREFERRED EMBODIMENT

Below, the present invention will be explained in detail.

First, the reasons for limitation of the composition of the steel will be explained. Note that % means "mass%".

C: C has to be contained in an amount of 0.3% or more to obtain a surface hardness HRC52 of more by quenching and tempering and to raise the rolling fatigue strength. Preferably it is 0.4% or more. On the other hand, if contained in an amount over 0.6%, the quenching hardness becomes higher than necessary, machining after quenching becomes difficult, and in addition quenching cracks easily occur. Therefore, the upper limit of the C content is made 0.6%. When making the carbon content 0.50% or more, after quenching and tempering, a hardness of Hv 700 or more can be obtained and a conventional steel level of rolling fatigue life can be secured. Therefore, the lower limit of the C content is made 0.5%.

Si: Si promotes the ferrite transformation in the steel of the present invention and is added at the time of production of steel bar or wire rod materials to soften said steel bars or wire rods by means of promoting a ferrite transformation during hot rolling. If added in less than 0.1%, no effect of promotion of ferrite transformation can be expected. On the other hand, if contained in over 2.0%, the cold and hot deformation resistances become high and the workability falls.

Mn: Mn bonds with S to form MnS which acts to raise the hot ductility and machinability. To fix S as MnS, a minimum of 0.1% of Mn is necessary. On the other hand, if the amount of Mn in solid solution increases, the steel becomes easily quenched.

The bearing part is used after being treated by QT-treatment (being quenched and tempered), so when focusing on only the QT-treatment, the easy quenching does not become a problem, but focusing on the producibility of the bearing part materials, that is, the steel bars or wire rod, when the rolled material is quenched and hardens, the risk rises of an inability of shearing after cooling, bending, and delayed fracture.

That is, control of the hardness of the bearing part materials, that is, steel bars or wire rods after rolling is extremely important for securing the producibility of the materials.

Whether the martensite fraction of the steel bars or wire rods rises and causes hardening after rolling also depends on the alloy elements other than the Mn and their contents, the rolling conditions, and the cooling rate, in the case of the composition of the steel of the present invention, if excessively adding Mn in an amount over 0.5%, slow cooling becomes necessary for softening, after rolling the steel bars or wire rods. As a result, the production cost greatly rises. Therefore, the upper limit of the Mn content is made 0.5%.

Cr: Cr has to be contained in a minimum amont of 3.0% in order to obtain the minimum extent of corrosion resistance in the air environment or a mild corrosive environment. The greater the Cr content, the better the pitting resistance, but if excessively contained, not only does the cost of the steel material rise, but also the rolling reaction at the time of rolling the steel bar material or wire rod material becomes large and controlled rolling becomes difficult. For this reason, the upper limit of the Cr content is made 8.0%. Preferably it is 7.0% or less.

Mo: Mo acts to raise the pitting resistance. However, Mo, added in slight amounts, causes quenching to become easier, so acts to increase the undesirable martensite structure after rolling the steel bar material or wire rod material. For this reason, to suppress the hardness of the steel bar material or wire rod maternal to a range not obstructing production, the Mo is restricted to 0.5% or less. Note that preferably it is less than 0.2%.

V and Nb: V and Nb are added for utilization of the precipitates of V and/or Nb as means for making the rolled structure of the steel bars or wire rods soft. The V and/or Nb precipitates have the effects of preventing coarsening of the austenite structure at the time of rolling the steel bars or wire rods and, through the action of delaying recrystallization, promoting the ferrite transformation.

For V and Nb both to give this effect, both have to be contained in amounts of 0.01% or more. On the other hand, if over 0.1%, the precipitation strengthening action causes the rolled material to harden, so the upper limit of both is made 0.1%.

Ni: Ni, like Cr, increases the corrosion resistance the greater its content, so a predetermined amount is added in accordance with need, but the greater the amount of Ni, the higher the quenchability, the greater the hardness of the steel bars or wire rods after rolling, and the higher the risk of delayed fracture. Therefore, to suppress the hardness, Ni is restricted to 2.0% or less. To reliably reduce the hardness of the steel bars or wire rods, the preferable Ni content is 1.0% or less.

N: Addition of a large amount of N becomes a cause for the formation of coarse nitrides becoming starting points for pitting. For this reason, to suppress the formation of coarse nitrides, N is restricted to 0.02% or less (including 0%).

Al: Al precipitates as fine AlN and acts to prevent coarsening of the crystal grains and reduce quenching strain at the time of at the time of quenching, so is added in a suitable quantity. However, if Al is present as an oxide, it becomes starting points for pitting, so when a high corrosion resistance is required, Al is restricted to 0.04% or less (including 0%).

Ti: Ti mainly precipitates as TiN and acts to prevent coarsening of the crystal grains and promote softening at the time of rolling the steel bars or wire rods. However, depending on the method of melting, coarse TiN is formed and becomes starting points of pitting, so the Ti content is restricted to 0.01% or less (including 0%).

$Cr-300 \times S \geq 2.0$ (Equation (1)) and $Cr+2.0 \times Ni-300 \times S \geq 2.0$ (Equation (2)): In the steel of the present invention, when Ni is not contained, Cr and S satisfy Equation (1), while when Ni is contained, Cr, Ni, and S must satisfying Equation (2).

The balance between the Cr and Ni raising the corrosion resistance and the S contributing to the forming of MnS forming the starting points of pitting is extremely important in the present invention. When Cr and S or Cr, Ni, and S meet the above Equation (1) or (2), the steel of the present invention realizes a pitting resistance equal to or better than that of 10% Cr conventional steel in the corrosive environment defined in JIS C0028.

Note that S is desirably restricted to 0.01% or less S so long as the requirements on machinability are not particularly strict.

O: O forms oxides which diffuse in the steel. The oxides, in the same way as the nitrides, become starting points for pitting, so the amounts are desirably small. Further, the oxides become starting points of fracture at the time of a rolling load in use of a bearing part and reduce the rolling fatigue life, so restriction to 0.0015% or less is desirable. In particular, when a high life is required, it is restricted to 0.0010% or less.

The other elements are as follows:

Cu tends to detract from the pitting resistance, though just a bit, and causes easy quenching, so is restricted in content to less than 0.2%. P has no particular effect on the pitting resistance and mechanical characteristics if within the usual range of content (0.05% or less or so).

In addition, Ca, Mg, Te, Hf, Zr, Ce, Sb, etc. are added in slight amounts in a range not detracting from the characteristics of steel of the present invention in accordance with the objective such as increasing the fineness of the sulfides, improving the machinability, and preventing decarburization. The above elements form oxides, so addition of a large amount is preferably avoided.

When hot rolling the bearing steel of the present invention into bearing steel materials (steel bars or wire rods), to enable said bearing steel materials to be made to reliably soften, the rolling end temperature is made less than 950°C. By making the rolling end temperature less than 950°C, it is possible to make the crystal grains of the austenite after rolling finer and to effectively prevent secondary recrystallization.

Still further, after the end of rolling, the material is cooled in the 800 to 400°C temperature region by a cooling rate of an average 0.5°C/sec or less. Due to this cooling, the ferrite, pearlite, and bainite transformations are promoted. The combination of the above rolling end temperature and the cooling zone and cooling rate promotes the ferrite and pearlite transformations and softens the bearing steel material.

After the bearing steel of the present invention is hot rolled to the bearing steel materials (steel bars or wire rods), ferrite and pearlite transformations are promoted to reliably soften the bearing steel material by loading the materials from a temperature of 400°C or more into a reheating furnace and holding it at 600 to 750°C for 900 seconds or more.

If the temperature before reheating is less than 400°C, depending on the steel composition, partial martensite transformation will begin and a uniform structure will not be able to be obtained. The holding temperature of 600 to 750°C is the ferrite and pearlite transformation temperature region, so softening in this temperature region becomes easy.

The holding time at the above holding temperature is made 900 seconds or more. If making the holding time less than 900 seconds and rapidly cooling, the untransformed austenite may transform to martensite and the transformation causes nonuniform hardness.

A bearing part produced by quenching and tempering treatment, using the steel of the present invention as a material, is provided with the necessary hardness and fatigue life as a bearing part. For the quenching, quenching in the air, in an inert gas atmosphere, or in vacuum or high frequency quenching may be used.

To obtain a sufficient hardness, the quenching temperature is made at least 950°C. Further, the tempering is performed mainly for the purpose of relieving the internal stress and prevent the occurrence of warping, so is performed at 150°C or less. If tempering at over 150°C, the hardness falls greatly.

The bearing part of the present invention is obtained by working the bearing steel of the present invention material into the required shape, then quenching and tempering it to raise the rolling fatigue strength. For the quenching, quenching in the air, in an inert gas atmosphere, or in vacuum or high frequency quenching may be used.

For the quenching, conditions giving a stable hardness have to be selected. For example, when quenching the Steel C shown in the later explained Table 1, a stable hardness (HRC62 or more) can be obtained by a quenching heating temperature of 950 to 1050°C.

Here, preferable examples of the composition of the steel of the present invention are shown in Table 1.

The Steel C is a steel containing the elements improving that pitting resistance, that is, Cr and Ni, in amounts of 5.7% and 0.5% respectively and suppressed in the elements forming pitting starting points, that is, S, N, Ti, and O, in amounts of 0.02% or less, 0.02% or less, 0.01% or less, and 0.0010% or less, respectively.

When making the carbon content 0.50% or more, after quenching and tempering, a hardness of Hv 700 or more can be obtained and a conventional steel level of rolling fatigue life can be secured. That is, the Steel C is provided with a conventional steel (Steel A (10% Cr steel)) level of pitting resistance and rolling fatigue characteristics.

The Steel D contains Cr in an amount of 6.1% and is reduced in the contents of S, Ti, and O so impart a conventional steel level of pitting resistance. Compared with the Steel C, its Si content is a high 0.7%. The pearlite transformation after rolling is promoted, so the Steel D is bearing steel of a composition enabling easy acquisition of softer steel bars or wire rods.

The inventors melted the Steel C and Steel D by a converter, cast them into 220×220 mm slabs, then cogged them into billets. They rolled the billets into steel bars and wire rods.

Each steel bar was obtained by rolling a billet at a heating temperature of 1050°C and a finishing temperature of 880°C to a diameter of 65 mm. When cooling the steel bar, the average cooling rate between 800 to 400°C was 0.32°C/sec. There was no bending or other abnormalities during the cooling.

The structure of the steel bar after cooling, while containing some martensite mixed in, was, with both the Steel C and Steel D, the desired structure mainly comprised of soft pearlite. As a result, the hardness of the steel bar was, with the Steel C, 390Hv, and, with the Steel D, 375Hv, so there was no problem with shearing.

That is, when working the Steel C and Steel D into steel bars, there is no need for special post heat treatment such as slow cooling after rolling. It was possible to employ a method of production completely the same as that for ordinary low alloy steel.

Each wire rod was obtained by rolling at a heating temperature of 1100°C and a finishing temperature of 920°C to a diameter of 16 mm, rolling, then taking it up in a 2-ton coil. When the center of the side face of the coil reached 660°C, the coil was loaded into a 720°C ambient temperature continuous heat treatment furnace, held there for 2400 seconds, then cooled somewhat in a chamber after the above furnace, then taken out from the furnace at 690°C and allowed to cool.

The structure of the wire rod after cooling was a substantially 100% pearlite structure. The hardness was, with the Steel C, 255Hv, and, with the Steel D, 267Hv. That is, at the time of production of a wire rod coil, use of a continuous heat treatment furnace enables the wire rod to be easily softened and delayed fracture to be prevented.

The performances of bearing parts made using as materials the Steel C and Steel D produced under the above production conditions and the performance of a bearing part made using as its material the Steel A (above-mentioned conventional steel) were evaluated as follows by rolling fatigue test pieces fabricated through the same heat treatment process as the process of production of the parts.

That is, in each case, a steel bar of a diameter of 65 mm was spheroidized annealed, quenched at 1000°C, tempered at 130°C, then ground and drilled to finish it into a thrust type rolling fatigue test piece (diameter 60.5 mm, thickness 5.0 mm, surface roughness Ry=1.0 $\mu$m). Said test piece was used for a thrust rolling fatigue test under conditions of six steel balls, a Hertz's stress of 4116 MPa, and a speed of 2000 rpm.

From n=20 test results, the L10 lives of the Steel C, Steel D, and Steel A (conventional steel) were found for $5.8 \times 10^6$ cycles, $6.0 \times 10^7$ cycles, and $6.3 \times 10^7$ cycles. It was learned that the steels of the present invention, that is, the Steel C and Steel D, are provided with rolling fatigue lives equivalent to that of the Steel A (conventional steel).

Still further, the Steel C, Steel D, and Steel A (conventional steel) were spheroidized annealed, quenched at 1000°C, and tempered at 130°C, then turned to bar-shaped test pieces of diameters of 55 mm, lengths of 100 m, and surface roughnesses Ry=1.0$\pm$0.2 $\mu$m. Each said test piece was subjected to a damp heat cycle test with no low temperature cycle (24 hr/cycle) based on JIS C0028 to evaluate the corrosion resistance.

The number of pits at the top half of the test piece placed horizontally on the tester floor (when observed from above) was, after a 16 cycle test, 20 for the Steel A (conventional steel), but 16 for the Steel C and 7 for the Steel D.

Note that if the steel of the present invention is quenched and tempered, the corrosion resistance is improved more than with the annealing state.

The bearing parts produced by such quenching and tempering include, specifically, rails and carriages for linear motion guiding systems, ball screws, XY tables, rotating motion roller bearings, radial bearings, steel balls, and other bearing parts in general and members of precision equipment provided with bearing functions.

Table 1

| No. | Appln. | C | Si | Mn | P | S | Ni | Cu | Cr | Al | Ti | N | O | Z |
|-----|--------|------|------|------|-------|-------|-----|------|-----|-------|-------|--------|--------|-----|
| C | Inv. steel | 0.52 | 0.25 | 0.25 | 0.020 | 0.009 | 0.5 | 0.02 | 5.7 | 0.013 | 0.001 | 0.0065 | 0.0007 | 4.0 |
| D | Inv. steel | 0.55 | 0.70 | 0.23 | 0.025 | 0.004 | - | 0.04 | 6.1 | 0.024 | 0.001 | 0.0170 | 0.0009 | 4.9 |
| Z=Cr+2.0Ni-300$\times$S | | | | | | | | | | | | | | |

EXAMPLES

Steel of each of the compositions shown in Table 2 was melted in an amount of 100 kg by vacuum melting and cast into an ingot. No. 30 is the 10% Cr corrosion resistant steel used as corrosion resistant bearing steel, while No. 32 is the most widely used bearing steel SUJ2 used for parts not requiring corrosion resistance.

Part of each ingot of the above steel was hot forged into a steel bar of a diameter of 30 mm, slowly cooled, then reheated at 1000°C for 600 seconds and oil quenched, then tempered at 130°C for 3600 seconds.

The above steel bar was finished to a steel bar of a diameter of 26 mm, a length of 150 mm, and a surface roughness Ry of 1.0 to 1.2 $\mu$m for use as a corrosion resistance test sample.

Table 2

| No. | Appn. | C | Si | Mn | P | S | Ni | Cu | Cr | Mo | Al | Ti | V | Nb | N | O | Z |
|---|---|---|---|---|---|---|---|---|---|---|---|---|---|---|---|---|---|
| 1 | Inv. st. | 0.52 | 0.81 | 0.25 | 0.020 | 0.010 | - | - | 6.3 | - | 0.020 | - | - | - | 0.0064 | 0.0007 | 3.3 |
| 2 | Inv. st. | 0.53 | 1.05 | 0.23 | 0.015 | 0.009 | - | - | 5.9 | - | 0.026 | - | 0.03 | - | 0.0044 | 0.0008 | 3.2 |
| 3 | Inv. st. | 0.53 | 0.75 | 0.22 | 0.013 | 0.008 | - | - | 6.0 | - | 0.024 | - | - | 0.03 | 0.0085 | 0.0013 | 3.6 |
| 4 | Inv. st. | 0.53 | 0.30 | 0.24 | 0.020 | 0.005 | - | - | 5.6 | - | 0.021 | - | - | - | 0.0110 | 0.0010 | 4.1 |
| 6 | Inv. st. | 0.54 | 0.49 | 0.19 | 0.016 | 0.005 | - | 0.05 | 5.5 | 0.2 | 0.004 | 0.007 | 0.02 | 0.10 | 0.0061 | 0.0009 | 4.0 |
| 9 | Inv. st. | 0.54 | 0.72 | 0.23 | 0.010 | 0.008 | 0.3 | - | 6.6 | - | 0.025 | - | 0.02 | 0.02 | 0.0103 | 0.0009 | 4.8 |
| 13 | Inv. st. | 0.59 | 0.22 | 0.24 | 0.011 | 0.014 | 0.2 | 0.05 | 7.5 | - | 0.021 | - | - | - | 0.0083 | 0.0013 | 3.7 |
| 17 | Inv. st. | 0.55 | 0.50 | 0.31 | 0.009 | 0.008 | 0.2 | 0.04 | 6.3 | - | 0.012 | 0.009 | - | 0.05 | 0.0113 | 0.0011 | 4.3 |
| 18 | Inv. st. | 0.52 | 0.69 | 0.30 | 0.026 | 0.005 | 0.5 | 0.19 | 4.0 | 0.2 | 0.025 | - | - | - | 0.0177 | 0.0010 | 3.5 |
| 19 | Inv. st. | 0.52 | 0.50 | 0.43 | 0.030 | 0.004 | 0.5 | 0.16 | 6.0 | 0.5 | 0.030 | - | - | - | 0.0190 | 0.0009 | 5.8 |
| 21 | Com. st. | 0.25 | 0.22 | 0.52 | 0.020 | 0.006 | 0.5 | 0.32 | 5.0 | 0.3 | 0.025 | 0.010 | - | - | 0.0072 | 0.0010 | 4.2 |
| 22 | Com. st. | 0.55 | 0.25 | 0.49 | 0.029 | 0.034 | 0.5 | 0.33 | 4.0 | 0.6 | 0.025 | - | - | - | 0.0105 | 0.0010 | -5.2 |
| 23 | Com. st. | 0.50 | 0.23 | 0.48 | 0.030 | 0.019 | - | - | 4.0 | 0.5 | 0.027 | - | - | - | 0.0182 | 0.0010 | -1.7 |
| 24 | Com. st. | 0.54 | 0.25 | 0.52 | 0.025 | 0.009 | 0.5 | - | 2.7 | 1.3 | 0.025 | - | - | - | 0.0107 | 0.0009 | 1.0 |
| 25 | Com. st. | 0.51 | 0.23 | 1.01 | 0.030 | 0.009 | 0.1 | 0.17 | 4.0 | - | 0.025 | - | 0.03 | 0.02 | 0.0155 | 0.0008 | 2.8 |
| 26 | Com. st. | 0.54 | 1.10 | 0.99 | 0.022 | 0.011 | 0.5 | 0.05 | 5.1 | - | 0.020 | 0.035 | - | - | 0.0140 | 0.0009 | 2.8 |
| 27 | Com. st. | 0.51 | 0.23 | 0.50 | 0.032 | 0.005 | 0.5 | 0.31 | 6.1 | 0.5 | 0.025 | - | - | - | 0.0772 | 0.0015 | 5.6 |
| 28 | Com. st. | 0.35 | 0.23 | 0.49 | 0.030 | 0.005 | 0.5 | 0.31 | 5.0 | 0.5 | 0.026 | - | - | - | 0.0331 | 0.0010 | 4.5 |
| 29 | Com. st. | 0.37 | 0.25 | 0.50 | 0.022 | 0.007 | 0.5 | 0.08 | 6.1 | 0.5 | 0.020 | - | - | - | 0.0721 | 0.0019 | 5.0 |
| 30 | Com. st. | 0.54 | 0.23 | 0.25 | 0.022 | 0.018 | 0.2 | 0.05 | 10.0 | 0.5 | 0.017 | 0.003 | - | - | 0.0253 | 0.0013 | 5.0 |
| 31 | Com. st. | 0.56 | 0.18 | 1.54 | 0.017 | 0.025 | 0.1 | 0.12 | 0.2 | - | 0.010 | - | - | - | 0.0082 | 0.0016 | -7.1 |
| 32 | Com. st. | 1.02 | 0.20 | 0.30 | 0.009 | 0.006 | 0.1 | 0.04 | 1.4 | - | 0.014 | - | - | - | 0.0057 | 0.0007 | -0.2 |

$Z = Cr + 2.0 \times Ni - 300 \times S$

The corrosion resistance was evaluated by a damp heat cycle test with no low temperature cycle (24 hr/cycle) based on JIS C0028. The results of evaluation of the state of corrosion are summarized in Table 3.

Table 3

| No. | Application | Results of hot damp cycle corrosion test | | | | Hardness (Hv) | Rolling fatigue life L10 (x10^7) |
|---|---|---|---|---|---|---|---|
| | | After 4 cycles | After 8 cycles | After 12 cycles | After 16 cycles | | |
| 1 | Inv. steel | O | O | O | O | 714 | 5.25 |
| 2 | Inv. steel | O | O | O | O | 710 | 5.87 |
| 3 | Inv. steel | O | O | O | O | 728 | 6.08 |
| 4 | Inv. steel | O | O | O | O | 717 | 6.54 |
| 6 | Inv. steel | O | O | O | △ | 713 | 6.29 |
| 9 | Inv. steel | O | O | O | △ | 713 | 5.59 |
| 13 | Inv. steel | O | O | O | △ | 750 | 4.76 |
| 17 | Inv. steel | O | O | O | △ | 742 | 6.36 |
| 18 | Inv. steel | O | △ | △ | △ | 704 | 6.86 |
| 19 | Inv. steel | O | O | O | O | 727 | 7.24 |
| 21 | Comp. steel | O | O | △ | △ | 408 | 0.72 |
| 22 | Comp. steel | × | × | × | × | 736 | 0.88 |
| 23 | Comp. steel | △ | × | × | × | 693 | 1.02 |
| 24 | Comp. steel | △ | △ | △ | △ | 730 | 5.45 |
| 25 | Comp. steel | O | △ | △ | △ | 698 | 5.91 |
| 26 | Comp. steel | △ | △ | O | △ | 713 | 2.01 |
| 27 | Comp. steel | O | O | O | O | 715 | 5.65 |
| 28 | Comp. steel | △ | △ | △ | △ | 549 | 1.47 |
| 29 | Comp. steel | O | △ | × | × | 571 | 0.80 |
| 30 | Comp. steel | O | △ | △ | △ | 708 | 6.29 |
| 31 | Comp. steel | × | △ | △ | × | 733 | 1.84 |
| 32 | Comp. steel | × | × | × | × | 745 | 2.61 |

The degrees of pitting of the steels of the present invention were equal to that of conventional steel containing Cr in an amount of 10%. In the corrosion states of Table 3, the "a circle (O)" marks indicate slight pitting in the sample as a whole at five or less locations, the "a triangle (△)" marks indicate light pitting at 5 to 25 locations, and the "×" marks indicate corrosion at 26 or more locations.

The 10% Cr conventional steel No. 30 was not entirely free of pitting, but up until 16 damp heat cycles, had only light corrosion ("a triangle (△)" marks). Further, in the usual bearing steel No. 32 (SUJ2), after 4 cycles, the sample as a whole was corroded. As opposed to this, the steels of the present invention were provided with corrosion resistances equal to or better than that of the conventional corrosion resistant bearing steel No. 30.

Part of each of the same 100 kg vacuum melted ingot was hot forged into a steel bar of a diameter of 70 mm and cooled, then 20 of 9-mm thick disk shaped samples were cut out from the steel bar. Each of the above disk-shaped samples was reheated at 1000°C for 600 seconds, quenched in water, then tempered at 130°C for 3600 seconds.

Each of these samples was finished to a thrust type rolling fatigue test piece (diameter 60.5 mm, thickness 5.0 mm, surface roughness Ry=1.0 μm) and used for a thrust rolling fatigue test under conditions of six steel balls, a hertz's stress of 4116 MPa, a speed of 2000 rpm, and an end number of $1.1 \times 10^8$. The test results were evaluated by the L10 lives and are shown together in Table 3.

The L10 lives of the steels of the present invention are equal to that of the conventional steel when the hardnesses are equal to that of the conventional high Cr corrosion resistant steel (conventional steel) No. 30 (L10=$6.29 \times 10^7$).

The method of production of the bearing steel of the present invention material by hot rolling into a steel bar was simulated in the laboratory using a test piece of a diameter of 8 mm and a length of 12 mm. The test piece was heated in vacuum at 1000°C for 600 seconds, then cooled by 5°C/sec to 920°C, upset forged 50% in the length direction, then cooled by 0.5°C/sec to room temperature.

Further, the martensite fraction of the part at 1/4 thickness of the test piece was measured. If the martensite becomes 50% or more in race the steel bar is rolled, bending occurs at the cooling bed, poor shearing occurs, and the probability of delayed fractures occurring increases.

Table 4 shows the martensite fractions in the structures. The steels of the present invention all had martensite fractions of less than 50%.

Table 4

| No. | Application | Martensite fraction (%) | Hardness after 700°C holding (Hv) |
|---|---|---|---|
| 1 | Inv. steel | 0 | 256 |
| 2 | Inv. steel | 0 | 250 |
| 3 | Inv. steel | 0 | 253 |
| 4 | Inv. steel | 15 | 242 |
| | | | |
| 6 | Inv. steel | 20 | 248 |
| | | | |
| 9 | Inv. steel | 0 | 296 |
| | | | |
| 13 | Inv. steel | 0 | 292 |
| | | | |
| 17 | Inv. steel | 0 | 277 |
| 18 | Inv. steel | 30 | 280 |
| 19 | Inv. steel | 40 | 272 |
| | | | |
| 21 | Comp. steel | 75 | 245 |
| 22 | Comp. steel | 80 | 296 |
| 23 | Comp. steel | 70 | 249 |
| 24 | Comp. steel | 100 | 244 |
| 25 | Comp. steel | 20 | 257 |
| 26 | Comp. steel | 5 | 282 |
| 27 | Comp. steel | 100 | 285 |
| 28 | Comp. steel | 100 | 246 |
| 29 | Comp. steel | 100 | 250 |
| 30 | Comp. steel | 100 | 326 |

(continued)

| No. | Application | Martensite fraction (%) | Hardness after 700°C holding (Hv) |
|---|---|---|---|
| 31 | Comp. steel | 0 | 210 |
| 32 | Comp. steel | 0 | 213 |

Further, a method of production of another bearing steel material of the present invention was simulated hot rolling and continuous heat treatment in the laboratory using the above test piece of a diameter of 8 mm and a length of 12 mm into a wire rod.

The above test piece was heated in a vacuum at 1050°C for 600 seconds, then cooled by 5°C/sec to 1000°C, upset forged 50% in the length direction, then cooled at 0.7°C/sec to 410°C.

After this, it was immediately heated by 3°C/sec to 700°C, held there for 900 seconds, then cooled by 1°C/sec to room temperature.

The results are shown in Table 4. All of the steels of the present invention had hardnesses of less than Hv300. That is, according to the method of production of the present invention, it is possible to control the hardness of a bearing steel material to a hardness of an extent not allowing delayed fracture.

INDUSTRIAL APPLICABILITY

The steels of the present invention are lower Cr compositions compared with conventional steel and remarkable resistant to quenching, so do not require slow cooling for softening the steel bars or wire rods used as materials for bearing parts and are excellent in producibility of materials for bearing parts.

Further, bearing parts produced by quenching and tempering the bearing steels of the present invention are provided with pitting resistances equal to that corrosion resistant bearing steel (conventional steel) containing Cr in an amount of 10% or more in a damp heat environment.

Therefore, according to the present invention, it is possible to produce and provide bearing parts provided with pitting resistance at a low cost, so the invention has a high capability of utilization as technology for producing machine parts and contributes to the development of the mechanical engineering industry.

**Claims**

1. Bearing steel excellent in producibility and corrosion resistance **characterized by** containing, by mass%,
   C in an amount of 0.5 to 0.6%,
   Si in an amount of 0.1 to 2.0%,
   Mn in an amount of 0.1 to 0.5%
   Cr in an amount of 3.0 to 8.0%, and
   Al in an amount of 0.04% or less, including 0%,
   S in an amount of 0.01% or less satisfying the following Equation (2):

$$Cr + 2.0 \times Ni - 300 \times S \geq 2.0 \qquad \qquad \dots (2)$$

   restricting
   Mo to an amount of 0.5% or less, including 0%, and
   N to an amount of 0.02% or less, including 0%, optionally containing one or more selected from
   Ni in an amount of 2.0% or less,
   Nb in an amount of 0.01 to 0.1%,
   V in an amount of 0.01 to 0.1%,
   Ti in an amount of 0.01% or less, including 0%,
   Cu in an amount of 0.2% or less and
   O in an amount of 0.0015% or less, including 0%,
   P in an amount of 0.05% or less
   with the balance of Fe and unavoidable impurities, and
   having a microstructure having martensite of less than 50% and pearlite, and
   having a hardness of less than Hv300.

2. A method of hot-rolling a steel having a composition as set forth in claim 1 to produce a soft bearing steel material, the method **characterized by** making the rolling end temperature less than 950°C and making the average cooling rate at 800 to 400°C after the end of rolling 0.5°C /sec or less, and loading the material into a reheating furnace from a temperature of 400°C or more and holding it at 600 to 750°C for at least 900 seconds.

3. A bearing part excellent in corrosion resistance **characterized by** using as a material a bearing steel as set forth in claim 1 and being produced by a process of production including a quenching and tempering step, and having a hardness of Hv700 or more.

4. A method of production of a bearing part excellent in corrosion resistance **characterized by** providing a soft bearing steel material produced by a method of production of a soft bearing steel material as set forth in claim 2 to a process of production of a bearing part including a quenching and tempering step,
wherein the quenching step is carried out under a quenching heating temperature of 950 to 1050°C, and
wherein the tempering step is carried out under a tempering temperature of 150°C or less.


**Patentansprüche**

1. Lagerstahl mit ausgezeichneter Herstellbarkeit und Korrosionsbeständigkeit, **dadurch gekennzeichnet, dass** er in Masse-% enthält:

C in einer Menge von 0,5 bis 0,6%,
Si in einer Menge von 0,1 bis 2,0%,
Mn in einer Menge von 0,1 bis 0,5%,
Cr in einer Menge von 3,0 bis 8,0%, und
Al in einer Menge von 0,04% oder weniger, einschließlich 0%,
S in einer Menge von 0,01% oder weniger,
die folgende Gleichung (2) erfüllt:

$$Cr+2{,}0\times Ni-300\times S \geq 2{,}0 \qquad ... (2)$$

beschränkt:

Mo auf eine Menge von 0,5% oder weniger, einschließlich 0%, und
N auf eine Menge von 0,02% oder weniger, einschließlich 0%,

optional eines oder mehreres enthält, das ausgewählt ist aus:

Ni in einer Menge von 2,0% oder weniger,
Nb in einer Menge von 0,01 bis 0,1%,
V in einer Menge von 0,01 bis 0,1%,
Ti in einer Menge von 0,01% oder weniger, einschließlich 0%,
Cu in einer Menge von 0,2% oder weniger und
O in einer Menge von 0,0015% oder weniger, einschließlich 0%,
P in einer Menge von 0,05% oder weniger,

wobei der Rest aus Fe und unvermeidbaren Verunreinigungen besteht, und
ein Mikrogefüge aufweist, das Martensit mit weniger als 50% und Perlit aufweist, und
eine Härte von weniger Hv300 aufweist.

2. Verfahren zum Warmwalzen eines Stahls mit einer Zusammensetzung nach Anspruch 1, um ein weiches Lagerstahlmaterial herzustellen, wobei das Verfahren **gekennzeichnet ist durch**: Einstellen der Walzendtemperatur auf weniger als 950°C und Einstellen der durchschnittlichen Abkühlrate bei 800 bis 400°C nach dem Ende des Walzens auf 0,5°C/s oder weniger, und Laden des Materials in einen Nachwärmofen von einer Temperatur von 400°C oder mehr und Halten des Materials für mindestens 900 Sekunden auf 600 bis 750°C.

**3.** Lagerteil mit ausgezeichneter Korrosionsbeständigkeit, **gekennzeichnet durch** Verwenden eines Lagerstahls nach Anspruch 1 als Material und dessen Herstellung durch einen Herstellungsprozess, der einen Quench- und Temperschritt aufweist, und der eine Härte von Hv700 oder mehr aufweist.

**4.** Verfahren zum Herstellen eines Lagerteils mit ausgezeichneter Korrosionsbeständigkeit, **gekennzeichnet durch** Bereitstellen eines weichen Lagerstahlmaterials, das durch ein Verfahren zum Herstellen eines weichen Lagerstahlmaterials nach Anspruch 2 hergestellt wird, für einen Herstellungsprozess, der einen Quench- und Temperschritt aufweist,
wobei der Quenchschritt bei einer Quencherwärmungstemperatur von 950 bis 1050°C ausgeführt wird, und
wobei der Temperschritt bei einer Tempertemperatur von 150°C oder weniger ausgeführt wird.

**Revendications**

**1.** Acier pour roulement d'excellentes productibilité et résistance à la corrosion **caractérisé en ce qu'**il contient, en % en masse,
C dans une quantité de 0,5 à 0,6 %,
Si dans une quantité de 0,1 à 2,0 %,
Mn dans une quantité de 0,1 à 0,5 %
Cr dans une quantité de 3,0 à 8,0 %, et
Al dans une quantité de 0,04 % ou inférieure, incluant 0 %,
S dans une quantité de 0,01 % ou inférieure satisfaisant l'équation (2) suivante :

$$Cr+2,0\times Ni-300\times S\geq 2,0 \qquad (2)$$

restreignant
Mo à une quantité de 0,5 % ou inférieure, incluant 0 %, et
N à une quantité de 0,02 % ou inférieure, incluant 0 %,
contenant éventuellement un ou plusieurs choisis parmi
Ni dans une quantité de 2,0 % ou inférieure,
Nb dans une quantité de 0,01 à 0,1 %,
V dans une quantité de 0,01 à 0,1 %,
Ti dans une quantité de 0,01 % ou inférieure, incluant 0 %,
Cu dans une quantité de 0,2 % ou inférieure et
O dans une quantité de 0,0015 % ou inférieure, incluant 0 %,
P dans une quantité de 0,05 % ou inférieure
avec le reste de Fe et d'impuretés inévitables, et
présentant une microstructure présentant de la martensite à moins de 50 % et de la perlite, et
présentant une dureté inférieure à Hv300.

**2.** Procédé de laminage à chaud d'un acier présentant une composition selon la revendication 1 pour produire un matériau d'acier pour roulement doux, le procédé caractérisé en rendant la température de fin de laminage inférieure à 950°C et rendant la vitesse moyenne de refroidissement de 800 à 400°C après la fin du laminage inférieure ou égale à 0,5°C/s, et chargeant le matériau dans un four de réchauffage d'une température de 400°C ou supérieure et le maintenant à de 600 à 750°C pendant au moins 900 secondes.

**3.** Partie pour roulement d'excellente résistance à la corrosion **caractérisée par** l'utilisation comme un matériau d'un acier pour roulement selon la revendication 1 et étant produite par un procédé de production incluant une étape de trempe et de revenu, et
présentant une dureté de Hv700 ou supérieure.

**4.** Procédé de production d'une partie de roulement d'excellente résistance à la corrosion **caractérisé par** la fourniture d'un matériau d'acier pour roulement doux produit par un procédé de production d'un matériau d'acier pour roulement doux selon la revendication 2 à un procédé de production d'une partie de roulement incluant une étape de trempe et de revenu,
dans lequel l'étape de trempe est réalisée sous une température de chauffage de trempe de 950 à 1 050°C, et

dans lequel l'étape de revenu est réalisée sous une température de revenu de 150°C ou inférieure.

Fig.1

# Fig.2

HEATING: 1050°C × 3min.

Ac1:821°C
Ac3:856°C

F
P
B
M

697   685   375   307   266   202

TEMPERATURE (°C)
TIME (S)

# Fig.3

HEATING: 1050°C × 3min.

Ac1:797°C
Ac3:836°C

F
P
B
M

715   714   681   633   553   355   256

TEMPERATURE (°C)
TIME (S)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9195008 A
- JP 11217653 A
- JP 7233442 A
- JP H04337024 B